# EUROPEAN PATENT SPECIFICATION

(11) **EP 3 633 705 B1**
(45) Date of publication and mention of the grant of the patent: **10.03.2021**
(21) Application number: 17910712.3
(22) Date of filing: 25.05.2017
(51) Int. Cl.: H01H 9/54, H02H 3/08, H01H 71/12, H02H 3/05, H02H 3/093

(54) **ELECTRONIC CIRCUIT BREAKER**
ELEKTRONISCHER SCHUTZSCHALTER
DISJONCTEUR ÉLECTRONIQUE

(43) Date of publication of application: 08.04.2020
(73) Proprietor: Mitsubishi Electric Corporation, Chiyoda-ku Tokyo 100-8310 (JP)
(72) Inventor: HARADA, Koki, Tokyo 100-8310 (JP); TAKIGAWA, Yusuke, Tokyo 100-8310 (JP); NOMURA, Toshimitsu, Tokyo 100-8310 (JP); CHIKAI, Masataka, Tokyo 102-0073 (JP)
(74) Representative: Diehl & Partner
(86) International application number: PCT/JP2017/019552
(87) International publication number: WO 2018/216167

(56) References cited:
- JP-A- H08 328 891
- JP-A- H08 331 748
- JP-A- 2001 128 354
- JP-A- 2002 008 510
- JP-A- 2003 044 323
- JP-A- 2010 092 623
- US-A- 5 311 392

## Description

### Field

The present invention relates to an electronic circuit breaker for detecting an overcurrent in a conducting path, and more particularly to an electronic circuit breaker that has a loosely coupled multiprocessor system including a plurality of microcomputers.

### Background

A conventional electronic circuit breaker has overcurrent tripping characteristics roughly classified into an instantaneous tripping characteristic and a time-limited tripping characteristic (See FIG. 1 of Patent Literature 1, for example).

Another conventional electronic circuit breaker includes a setting unit for setting overcurrent tripping characteristics after installation of the electronic circuit breaker depending on a situation of connection and usage of a load device connected to a conducting path on the load side (See FIG. 1 of Patent Literature 2, for example).

On the other hand, a conventional loosely coupled multiprocessor system is composed of two or more microcomputers, which are interconnected by communication. Each of the microcomputers includes a watchdog timer as an abnormality detector means for each system.

Thus, when one of the microcomputers fails due to a hardware or software failure or the like, only the microcomputer having the problem is reset by the watchdog timer specific thereto, and thereby synchronization for communication with the other normal microcomputers is failed. Once the communicational synchronization is lost, communication timeout is caused and so it takes much time until the communicational synchronization is restored. To deal with this, there has been known a method of resetting all the microcomputers together at the time of abnormality (see Patent Literature 3, for example).

Document US 5 311 392 A discloses a conventional electronic circuit breaker according to the preamble of claim 1.

### Citation List

### Patent Literature

Patent Literature 1: Japanese Patent Application Laid-open No. H8-331748
Patent Literature 2: Japanese Patent Application Laid-open No. 2001-128354
Patent Literature 3: Japanese Patent Application Laid-open No. 2003-44323

### Summary

### Technical Problem

Processing related to the overcurrent tripping characteristic of the conventional electronic circuit breaker mentioned above is classified into processing of the instantaneous tripping characteristic for which high speed processing is required (for example, in a one millisecond cycle), processing of the time-limited tripping characteristic for which relatively low speed processing is allowed (for example, in a 12.5 milliseconds cycle), and setting processing for storing overcurrent tripping characteristic data set from the outside (for example, in a 100 milliseconds cycle). Accordingly, when the conventional loosely coupled multiprocessor system is applied to an electronic circuit breaker, it is desirable that the high speed processing for performing the processing of the instantaneous tripping characteristic and the low speed processing for performing the processing of the time-limited tripping characteristic are implemented by their respective separate microcomputers. In that case, setting data such as the overcurrent tripping characteristic required for both of the microcomputers is to be shared by low speed communications between the microcomputers (for example, in a 100 milliseconds cycle) .

However, in the electronic circuit breaker to which the loosely coupled multiprocessor system is applied, an abnormality occurring in any of the microcomputers results in resetting of all the microcomputers. Thereby, even if only one microcomputer needs to be reset, the other normal microcomputer can be reset, so that the setting data and data stored for processing the time-limited tripping characteristic can be lost and the reliability of the electronic circuit breaker is reduced.

The present invention has been made to solve the aforementioned problems and aims to improve the reliability of an electronic circuit breaker with communicational synchronization being restored in a short time even if only an abnormal microcomputer is reset when an abnormality is caused in the microcomputers.

### Solution to Problem

The present invention provides an electronic circuit breaker comprising: a make and break contact to open and close a conducting path, a current sensor to detect an electrical current through the conducting path; a first microcomputer to receive an output signal of the current sensor as an input and output an instantaneous tripping signal; a second microcomputer to acquire information on a current flowing through the conducing path from the first microcomputer and output a time-limited tripping signal; and a tripping device to release the make and break contact on the basis of the instantaneous tripping signal and the time-limited tripping signal, wherein the first microcomputer notifies the second microcomputer that the first microcomputer has been restarted by a port output or parallel communication, and the second microcomputer notifies the first microcomputer that the second microcomputer has been restarted by the parallel communication or the port output.

### Advantageous Effects of Invention

According to the present invention, the communicational synchronization is restored in a short time even if only a microcomputer having an abnormality is reset, so that a normal microcomputer need not be reset and reliability of the electronic circuit breaker can be improved.

### Brief Description of Drawings

- FIG. 1: is a block diagram illustrating an electronic circuit breaker according to a first embodiment of the present invention.
- FIG. 2: is a functional block diagram illustrating functions of microcomputers in the electronic circuit breaker illustrated in FIG. 1.
- FIG. 3: is a flowchart illustrating main processing of a first microcomputer illustrated in FIG. 2.
- FIG. 4: is a flowchart illustrating main processing of a second microcomputer illustrated in FIG. 2.
- FIG. 5: is a functional block diagram illustrating functions of the microcomputers for an electronic circuit breaker according to a second embodiment of the present invention.
- FIG. 6: is a flowchart illustrating main processing of the first microcomputer illustrated in FIG. 5.
- FIG. 7: is a flowchart illustrating main processing of the second microcomputer illustrated in FIG. 5.
- FIG. 8: is a circuit diagram illustrating an electronic circuit breaker according to a third embodiment of the present invention.
- FIG. 9: is a circuit diagram illustrating an electronic circuit breaker according to a fourth embodiment of the present invention.
- FIG. 10: is a circuit diagram illustrating an electronic circuit breaker according to a fifth embodiment of the present invention.
- FIG. 11: is a circuit diagram illustrating an electronic circuit breaker according to a sixth embodiment of the present invention.

### Description of Embodiments

### First Embodiment.

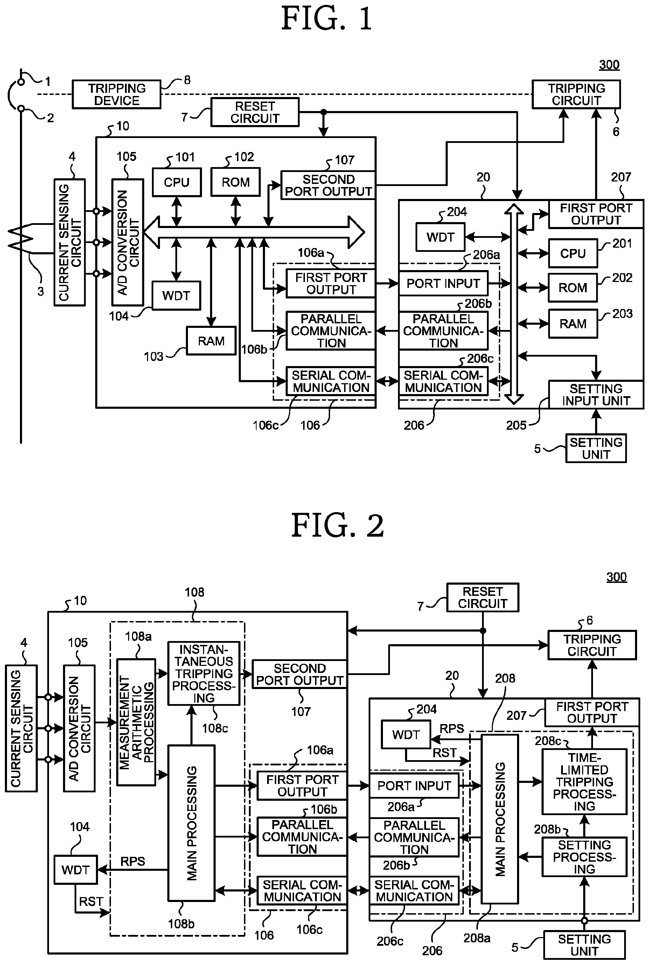

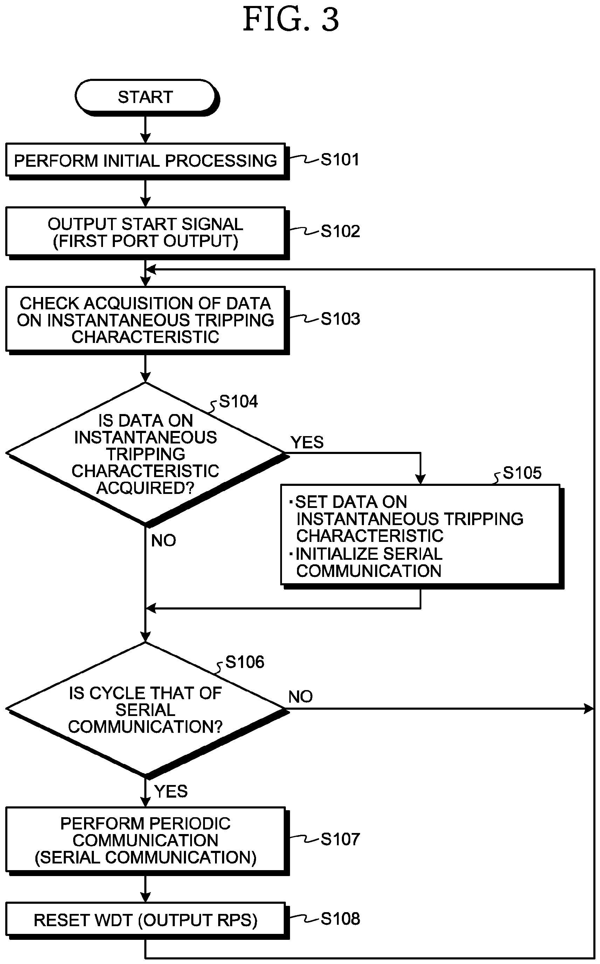

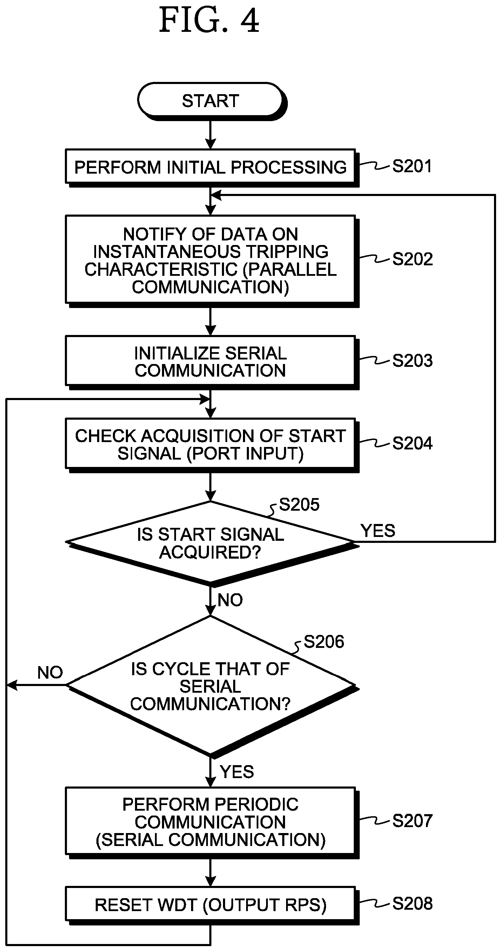

FIG. 1 is a block diagram of an electronic circuit breaker according to a first embodiment of the present invention, FIG. 2 is a functional block diagram illustrating functions of first and second microcomputers illustrated in FIG. 1, FIG. 3 is a flowchart illustrating main processing of the first microcomputer illustrated in FIG. 2, and FIG. 4 is a flowchart illustrating main processing of the second microcomputer illustrated in FIG. 2.

As illustrated in FIG. 1, an electronic circuit breaker 300 according to the present embodiment is configured to include: a make and break contact 2 that makes and breaks an alternating current conducting path 1; a current sensor 3 that is provided in the alternating current conducting path 1 and outputs an electric current signal proportional to a load current flowing through the alternating current conducting path 1; a current sensing circuit 4 that converts the current signal from the current sensor 3 into an analog voltage signal; a setting unit 5 that sets data on an overcurrent tripping characteristic; a first microcomputer 10 that performs processing of an instantaneous tripping characteristic requiring high speed processing (for example, in a one millisecond cycle) on the basis of the analog voltage signal from the current sensing circuit 4; a second microcomputer 20 that performs relatively low speed processing of a time-limited tripping characteristic (for example, in a 12.5 milliseconds cycle) with acquiring a signal of the load current flowing through the alternating current conducing path 1 from the first microcomputer 10 via communication therewith, and setting processing (for example, in a 100 milliseconds cycle) for storing data of the instantaneous and time-limited tripping characteristics set by the setting unit 5; a tripping circuit 6 that drives a tripping device 8 according to tripping signals from the first microcomputer 10 and the second microcomputer 20 and releases the make and break contact 2; and a reset circuit 7 that outputs a reset signal to the first microcomputer 10 and the second microcomputer 20.

The first microcomputer 10 is configured to include a CPU 101, a ROM 102, a RAM 103, and a watchdog timer 104 that make up a microcomputer, an A/D conversion circuit 105 that converts the analog voltage signal from the current sensing circuit 4 into a digital signal, a first port output 106a that outputs a start signal to the second microcomputer 20, a parallel communication 106b for receiving setting data from the second microcomputer 20, a serial communication 106c for periodically communicating with the second microcomputer 20, and a second port output 107 that drives the tripping circuit 6.

The second microcomputer 20 is similarly configured to include a CPU 201, a ROM 202, a RAM 203, and a watchdog timer 204 that make up another microcomputer, a setting input unit 205 that reads the setting data from the setting unit 5, a port input 206a that receives the start signal from the first microcomputer 10 as an input, a parallel communication 206b for transmitting the setting data to the parallel communication 106b of the first microcomputer 10, a serial communication 206c for periodically communicating with the first microcomputer 10, and a first port output 207 that drives the tripping circuit 6.

Next, the operation of software in the first microcomputer 10 and the second microcomputer 20 will be described.

As illustrated in FIG. 2, software processing by the CPU 101 of the first microcomputer 10 includes measurement arithmetic processing 108a for calculating the value of the load current flowing in each phase of the conducting path on the basis of the digital signal from the A/D conversion circuit 105, main processing 108b for communicating with the second microcomputer 20 and resetting the watchdog timer 104, and instantaneous tripping processing 108c for outputting an instantaneous tripping signal to the tripping circuit 6 on the basis of data on the instantaneous tripping characteristic acquired from the second microcomputer 20 by communication and the value of the load current calculated in the measurement arithmetic processing 108a.

Software processing by the CPU 201 of the second microcomputer 20 includes main processing 208a for communicating with the first microcomputer 10 and resetting the watchdog timer 204, setting processing 208b for storing the data on the overcurrent tripping characteristic set by the setting unit 5, and time-limited tripping processing 208c for outputting a time-limited tripping signal to the tripping circuit 6 by calculation based on the value of the load current acquired from the first microcomputer 10 and the data on the time-limited tripping characteristic acquired from the setting unit 5.

The communication between the first microcomputer 10 and the second microcomputer 20 has the following three characteristic configurations.
(1) The first port output 106a and the port input 206a for notifying the second microcomputer 20 of the start signal from the first microcomputer 10 when the first microcomputer 10 is reset.
(2) The parallel communication for notifying the first microcomputer 10 of the data on the instantaneous tripping characteristic from the second microcomputer 20 when the second microcomputer 20 is reset or when the second microcomputer 20 receives the start signal from the first microcomputer 10.
(3) The serial communication for periodically communicating the data on the instantaneous tripping characteristic and the value of the load current between the first microcomputer 10 and the second microcomputer 20.

Note that the reason for using the parallel communication in the above (2) is as follows. The instantaneous tripping operation of the circuit breaker requires an operation for which only a short time of several tens of milliseconds is allowed from power-on to tripping, so that, if the microcomputer is reset, the system must be restored in a rather short time of one millisecond or less. Therefore, the parallel communication is used to notify the first microcomputer 10 of the data on the instantaneous tripping characteristic from the second microcomputer 20 at high speed.

Moreover, the reason for using the serial communication in the above (3) is that a rather long time of several tens of milliseconds to several hundreds of milliseconds suffices for the communication interval of the periodic communication, and thus serial communication having a low speed suffices.

Next, the main processing 108b of the first microcomputer 10 and the main processing 208a of the second microcomputer 20 for implementing the electronic circuit breaker 300 according to the present embodiment will be described with reference to flowcharts.

First, the main processing 108b of the first microcomputer 10 will be described.

As illustrated in FIG. 3, after having started up, the first microcomputer 10 proceeds to step S101 and performs initial processing such as setting of input and output ports. Next, in step S102, output of a start signal to the port input 206a of the second microcomputer 20 is performed using the first port output 106a. Next, in step S103, the first microcomputer 10 checks whether data on the instantaneous tripping characteristic is received from the second microcomputer 20 by parallel communication. Thereafter, the processing proceeds to step S104, and if the data on the instantaneous tripping characteristic has been received in step S103, then it proceeds to step S105 or if the data on the instantaneous tripping characteristic has not been received in step S103, it proceeds to step S106.

In step S105, the second microcomputer 20 has been restarted, so that the data on the instantaneous tripping characteristic received from the second microcomputer 20 is set in the instantaneous tripping processing 108c, and after the serial communication is initialized, the processing proceeds to step S106. In step S106, it is determined whether the cycle is a cycle (for example, a 12.5 milliseconds cycle) by the serial communication. If the cycle is that of the serial communication, the processing proceeds to S107, but if the cycle is not that of the serial communication, it returns to S103 and repeats the processing for step S103 and subsequent steps thereto.

In step S107, periodic communication based on the serial communication is started, and the data on the instantaneous tripping characteristic and the value of the load current are periodically communicated between the first microcomputer 10 and the second microcomputer 20. Thereafter, the processing proceeds to step S108. In step S108, a running pulse RPS is outputted to the watchdog timer 104 built in the first microcomputer 10, and after resetting the watchdog timer 104, the processing returns to step S103 and repeats the processing for step S103 and subsequent steps thereto.

Next, the main processing 208a of the second microcomputer 20 will be described.

As illustrated in FIG. 4, after having started up, the second microcomputer 20 proceeds to step S201 and performs initial processing for setting of input/output ports or the like operation. Next, in step S202, the second microcomputer 20 transmits the data on the instantaneous tripping characteristic to the first microcomputer 10 by parallel communication, and then proceeds to step S203. In step S203, the serial communication is initialized, and the processing proceeds to step S204. In step S204, the second microcomputer 20 checks the port input 206a and performs processing for reading the start signal from the first microcomputer 10. Then in step S205, if it is determined that the start signal has been received in step S204, what is meant by that case is that the first microcomputer 10 has been restarted, so that the processing returns to step S202. Then, the data on the instantaneous tripping characteristic is transmitted to the first microcomputer 10 by parallel communication, and thereafter the subsequent processing is repeated. The processing proceeds to step S206 if the start signal has not been received in step S204.

In step S206, determination of whether the cycle is that of the serial communication (for example, a 12.5 milliseconds cycle) is made. If the cycle is that of the serial communication, the processing proceeds to S207, but if the cycle is not that of the serial communication, it returns to S204 and repeats the processing for step S204 and subsequent steps thereto. In step S207, the periodic communication based on the serial communication is started, and the data of the instantaneous tripping characteristic and the value of the load current are periodically communicated between the first microcomputer 10 and the second microcomputer 20. Thereafter, the processing proceeds to step S208. In step S208, the running pulse RPS is outputted to the watchdog timer 204 built in the second microcomputer 20, and after resetting the watchdog timer 204, the processing returns to step S204 to repeat the processing for step S204 and subsequent steps thereto.

Next, the operation performed when the first microcomputer 10 is reset will be described.

When the first microcomputer 10 is reset, the start signal is outputted to the second microcomputer 20 in step S102 illustrated in FIG. 3. The second microcomputer 20 normally repeats step S204 to step S206 illustrated in FIG. 4 at high speed, so that the start signal from the first microcomputer 10 is detected in step S204 in a short time, and the processing of the second microcomputer 20 moves from step S205 to step S202. In step S202, the data on the instantaneous tripping characteristic is transmitted to the first microcomputer 10 by parallel communication.

On the other hand, the first microcomputer 10 repeats step S103 to step S106 at high speed after outputting the start signal in step S102, so that the data on the instantaneous tripping characteristic from the second microcomputer 20 is acquired in step S103 in a short time. When the data on the instantaneous tripping characteristic is acquired, the processing of the first microcomputer 10 moves from step S104 to step S105, which sets the data on the instantaneous tripping characteristic and initializes the serial communication, whereby the first microcomputer 10 resumes the instantaneous tripping processing and transmission of the value of the load current to the second microcomputer 20 by serial communication, and the time-limited tripping processing is continued.

Next, the operation performed when the second microcomputer 20 is reset will be described.

When the second microcomputer 20 is reset, in step S202 illustrated in FIG. 4, the first microcomputer 10 is notified of the data on the instantaneous tripping characteristic by parallel communication. The first microcomputer 10 repeats a process from step S103 to step S106 illustrated in FIG. 3 at high speed in a normal mode, so that the notification of the data on the instantaneous tripping characteristic from the second microcomputer 20 is detected in step S103 in a short time, and the processing of the first microcomputer 10 moves from step S104 to step S105. In step S105, the setting of the data on the instantaneous tripping characteristic and initialization of the serial communication are performed, and transmission of the value of the load current to the second microcomputer 20 by serial communication is resumed, whereby the second microcomputer 20 can resume the time-limited tripping processing 208c in a short time.

As described above, when the first microcomputer 10 is reset, the start signal that is a port output is outputted from the first microcomputer 10 to the second microcomputer 20 to notify the second microcomputer 20 that the first microcomputer 10 has been restarted, whereby the second microcomputer 20 having received the notification of the start signal can promptly transmit the data on the instantaneous tripping characteristic to the first microcomputer 10 by parallel communication, and the instantaneous tripping processing of the first microcomputer 10 can be recovered in a short time.

Moreover, when the second microcomputer 20 is reset, the data on the instantaneous tripping characteristic is outputted from the second microcomputer 20 to the first microcomputer 10 by parallel communication and the first microcomputer 10 is notified that the second microcomputer 20 has been restarted, whereby the first microcomputer 10 having received the data on the instantaneous tripping characteristic can initialize the serial communication and resume transmission of the value of the load current to the second microcomputer 20 by the serial communication, and the second microcomputer 20 can resume the time-limited tripping processing 208c in a short time.

According to the present embodiment, the first microcomputer 10 notifies the second microcomputer 20 that the first microcomputer 10 has restarted via the first port output 106a, and the second microcomputer 20 notifies the first microcomputer 10 that the second microcomputer 20 has restarted via the parallel communication 206b, so that, even when only a microcomputer having an abnormality is reset, the communicational synchronization is restored in a short time with no need to reset a normal microcomputer, whereby reliability of the electronic circuit breaker 300 can be improved.

Moreover, the first microcomputer 10 provides notification of the restart thereof by the first port output 106a while the second microcomputer 20 provides notification of the restart thereof by the parallel communication 206b, thereby requiring only software with no need for a special external hardware circuit or the like to recover mutual communicational synchronization, so that the electronic circuit breaker 300 can be implemented with low cost.

The second microcomputer 20 provides notification of the restart thereof by the parallel communication 206b simultaneously with transmission of the data on the instantaneous tripping characteristic, so that the serial communication can be recovered in a very short time, the time-limited tripping processing 208c of the second microcomputer 20 can be resumed in a short time, and reliability of the electronic circuit breaker 300 can be improved.

Meanwhile, when the first microcomputer 10 has been reset, the first microcomputer 10 notifies the second microcomputer 20 that its restoration to the normal state has been made, using the start signal by the port output and promptly receives the characteristic data from the second microcomputer 20 by parallel communication, thereby making it possible to reduce the time for which the first microcomputer 10 loses the characteristic data for instantaneous tripping and improve safety.

Moreover, the serial communication is also recovered in a short time, so that the second microcomputer 20 can resume the time-limited tripping processing in a short time and improve reliability.

### Second Embodiment.

The first embodiment illustrates the case where the setting unit 5 is connected to the second microcomputer 20 that performs the time-limited tripping processing, whereas the present embodiment describes a case where the setting unit 5 is connected to the first microcomputer 10 that performs the instantaneous tripping processing.

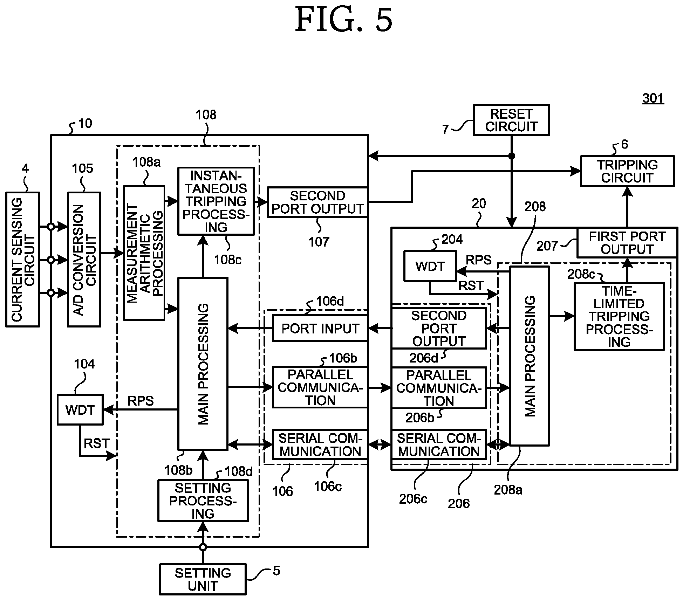

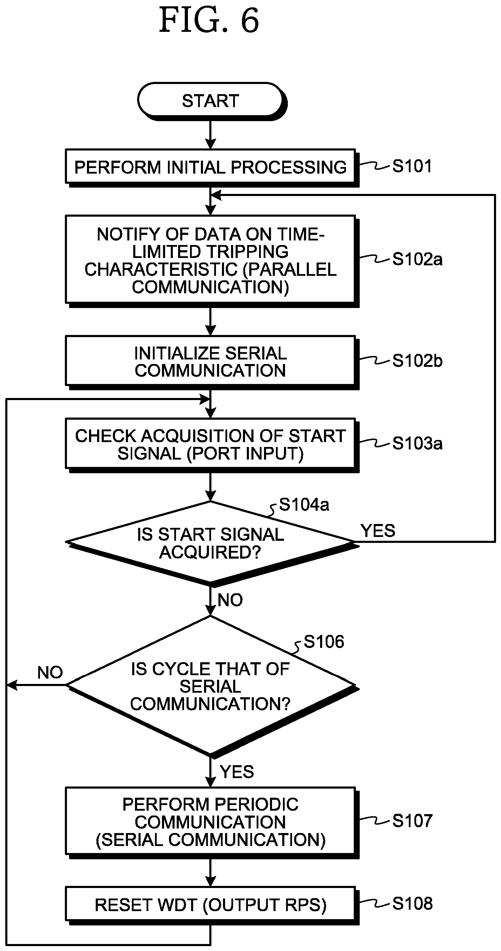

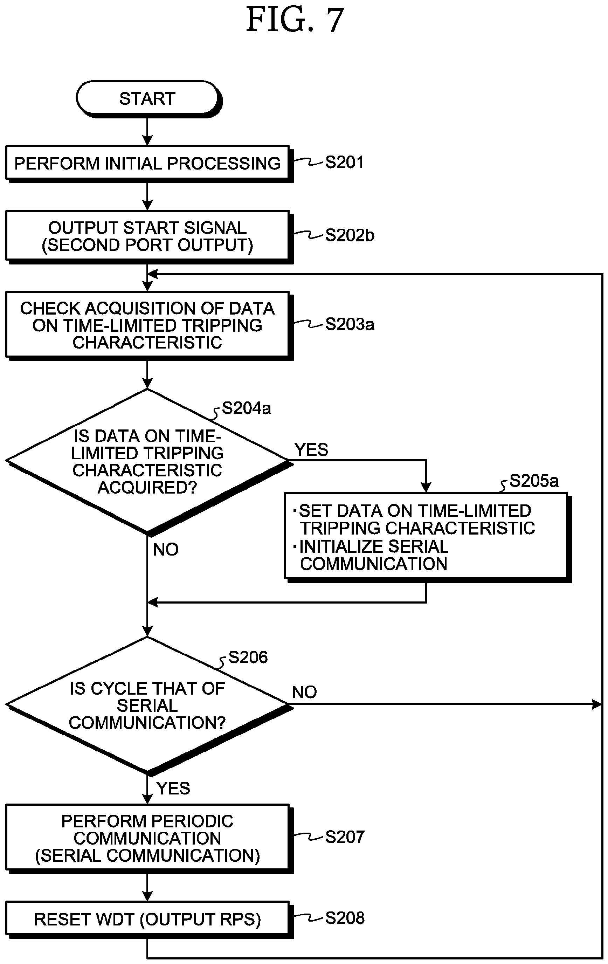

FIG. 5 is a functional block diagram illustrating functions of the microcomputers included in an electronic circuit breaker according to a second embodiment of the present invention, FIG. 6 is a flowchart illustrating the main processing of the first microcomputer 10 illustrated in FIG. 5, and FIG. 7 is a flowchart illustrating the main processing of the second microcomputer 20 illustrated in FIG. 5.

In an electronic circuit breaker 301 in the present embodiment, the setting unit 5 is connected to the first microcomputer 10. Moreover, the first microcomputer 10 is provided with a port input 106d for inputting a start signal from the second microcomputer 20 in place of the first port output 106a, and the second microcomputer 20 is provided with a second port output 206d for outputting a start signal to the first microcomputer 10 in place of the port input 206a. The other configurations are similar to those of the first embodiment illustrated in FIG. 1 and thus will not be described.

Next, the software operation of the first microcomputer 10 and the second microcomputer 20 according to the present embodiment will be described.

As illustrated in FIG. 5, software processing by the CPU 101 of the first microcomputer 10 includes the measurement arithmetic processing 108a for calculating the value of the load current flowing in each phase of the conducting path on the basis of a digital signal from the A/D conversion circuit 105, the main processing 108b for communicating with the second microcomputer 20, the instantaneous tripping processing 108c for outputting an instantaneous tripping signal to the tripping circuit 6 on the basis of the overcurrent tripping characteristic data acquired from the second microcomputer 20 by communication and the value of the load current calculated in the measurement arithmetic processing 108a, and setting processing 108d for storing overcurrent tripping characteristic data set by the setting unit 5.

Software processing by the CPU 201 of the second microcomputer 20 includes the main processing 208a for communicating with the first microcomputer 10, and the time-limited tripping processing 208c for outputting a time-limited tripping signal to the tripping circuit 6 by calculation based on the value of the load current acquired from the first microcomputer 10 and data on the time-limited tripping characteristic acquired from the first microcomputer 10.

Next, the main processing 108b of the first microcomputer 10 and the main processing 208a of the second microcomputer 20 for implementing the electronic circuit breaker 301 will be described with reference to flowcharts.

First, the main processing 108b of the first microcomputer 10 will be described.

As illustrated in FIG. 6, after the first microcomputer 10 has started up, the first microcomputer 10 proceeds to step S101 and performs initial processing such as setting of input and output ports. Next, in step S102a, the first microcomputer 10 transmits data on the time-limited tripping characteristic to the second microcomputer 20 by parallel communication, and then proceeds to step S102b. In step S102b, the serial communication is initialized, and the processing proceeds to step S103a. In step S103a, the first microcomputer 10 checks the port input 106d to check whether the start signal is inputted from the second microcomputer 20. Then, if it is determined in step S104a that the start signal has been received in step S103a, what is meant by this determination is that the second microcomputer 20 has been restarted, so that the processing returns to step S102a to transmit the data on the time-limited tripping characteristic to the second microcomputer 20 by parallel communication and then repeat the subsequent processing. The processing proceeds to step S106 if the start signal has not been received in step S104a.

Step S106 determines whether the cycle is a cycle (for example, a 12.5 milliseconds cycle) of the serial communication. The processing proceeds to S107 if the cycle is that of the serial communication, but it returns to S103a and repeats the processing for step S103a and subsequent steps thereto if the cycle is not that of the serial communication. In step S107, periodic communication based on the serial communication is started, the data on the time-limited tripping characteristic and the value of the load current are periodically communicated between the first microcomputer 10 and the second microcomputer 20, and the processing proceeds to step S108. In step S108, the running pulse RPS is outputted to the watchdog timer 104 built in the first microcomputer 10, and after resetting the watchdog timer 104, the processing returns to step S103a and repeats the processing for step S103a and subsequent steps thereto.

Next, the main processing 208a of the second microcomputer 20 will be described.

As illustrated in FIG. 7, after the second microcomputer 20 has started up, the second microcomputer 20 proceeds to step S201 and performs initial processing such as setting of input and output ports. Next, in step S202b, the second port output 206d is caused to output the start signal to the port input 106d of the first microcomputer 10. Next, in step S203a, the second microcomputer 20 checks whether data on the time-limited tripping characteristic has been received from the first microcomputer 10 by parallel communication. Thereafter, the processing proceeds to step S204a, and if the characteristic data has been received in step S203a, it goes to step S205a but if the characteristic data has not been received in step S203a, it goes to step S206.

In step S205a, the first microcomputer 10 has been restarted, so that the data on the time-limited tripping characteristic received from the first microcomputer 10 is set in the time-limited tripping processing 208c and the serial communication is initialized, and then the processing proceeds to step S206. Step S206 determines whether it is a cycle (for example, a 12.5 milliseconds cycle) of the serial communication. The processing proceeds to S207 if the cycle is that of the serial communication, but it returns to S203a and repeats the processing for step S203a and subsequent steps thereto if the cycle is not that of the serial communication.

In step S207, periodic communication based on the serial communication is performed, in which the data on the time-limited tripping characteristic and the value of the load current are periodically communicated between the first microcomputer 10 and the second microcomputer 20, and then the processing proceeds to step S208. In step S208, the running pulse RPS is outputted to the watchdog timer 204 built in the second microcomputer 20, and after resetting the watchdog timer 204, the processing returns to step S203a and repeats the processing for step S203a and subsequent steps thereto.

Next, the case where the first microcomputer 10 is reset will be described.

When the first microcomputer 10 is reset, the second microcomputer 20 is notified of the data on the time-limited tripping characteristic by parallel communication in step S102a illustrated in FIG. 6. The second microcomputer 20 normally repeats a process for step S203a to step S206 illustrated in FIG. 7 at high speed, so that the notification of the data on the time-limited tripping characteristic from the first microcomputer 10 is acquired in step S203a in a short time. When the data on the time-limited tripping characteristic is acquired, the processing of the second microcomputer 20 moves from step S204a to step S205a, and the data on the time-limited tripping characteristic is set and the serial communication is initialized, so that reception of the value of the load current from the first microcomputer 10 by serial communication is resumed thereby allowing the second microcomputer 20 to resume the time-limited tripping processing 208c in a short time.

Next, the case where the second microcomputer 20 is reset will be described.

When the second microcomputer 20 is reset, the start signal is outputted from the second port output to the first microcomputer 10 in step S202b illustrated in FIG. 7. The first microcomputer 10 normally repeats a process for step S103a to step S106 illustrated in FIG. 6 at high speed, so that the output of the start signal from the second microcomputer 20 is immediately detected in step S103a. Then, the processing of the first microcomputer 10 returns from step S104a to step S102a, in which the second microcomputer 20 is notified of the data on the time-limited tripping characteristic by parallel communication.

On the other hand, the second microcomputer 20 repeats a process for step S203a to step S206 at high speed, so that the notification of the data on the time-limited tripping characteristic from the first microcomputer 10 is immediately acquired in step S203a. When the data on the time-limited tripping characteristic is acquired, the processing of the second microcomputer 20 moves from step S204a to step S205a, in which the data on the time-limited tripping characteristic is set and the serial communication is initialized, and reception of the value of the load current from the first microcomputer 10 by serial communication is resumed, so that the second microcomputer 20 can resume the time-limited tripping processing 208c in a short time.

As described above, when the first microcomputer 10 is reset, the data on the time-limited tripping characteristic is outputted from the first microcomputer 10 to the second microcomputer 20 by parallel communication to notify the second microcomputer 20 that the first microcomputer 10 has been restarted, whereby the second microcomputer 20 having been notified of the data on the time-limited tripping characteristic can promptly initialize the serial communication, resume reception of the value of the load current from the first microcomputer 10 by serial communication, and resume the time-limited tripping processing 208c in a short time.

Moreover, when the second microcomputer 20 is reset, the start signal that is the port output is outputted from the second microcomputer 20 to the first microcomputer 10 to notify the first microcomputer 10 that the second microcomputer 20 has been restarted, whereby the first microcomputer 10 having detected the start signal can promptly parallelly-transmit the data on the time-limited tripping characteristic to the second microcomputer 20, initialize the serial communication, and resume transmission of the value of the load current to the second microcomputer 20 by the serial communication, thereby allowing the second microcomputer 20 to resume the time-limited tripping processing 208c in a short time.

According to the present embodiment, the first microcomputer 10 notifies the second microcomputer 20 that the first microcomputer 10 has restarted by the parallel communication 106b, and the second microcomputer 20 notifies the first microcomputer 10 that the second microcomputer 20 has restarted by the second port output 206d, so that, even when only a microcomputer having an abnormality is reset, the communicational synchronization is restored in a short time with no need to reset a normal microcomputer, whereby reliability of the electronic circuit breaker 301 can be improved.

Moreover, the first microcomputer 10 provides notification of the restart thereof by the parallel communication 106b while the second microcomputer 20 provides notification of the restart thereof by the second port output 206d, thereby requiring only software with no need for a special external hardware circuit or the like to recover mutual communicational synchronization, so that the electronic circuit breaker 301 can be implemented with low cost.

The first microcomputer 10 provides notification of the restart thereof by the parallel communication 106b simultaneously with transmission of the data on the time-limited tripping characteristic, so that the serial communication can be recovered in a very short time, the time-limited tripping processing 208c of the second microcomputer 20 can be resumed in a short time, and reliability of the electronic circuit breaker 301 can be improved.

### Third Embodiment.

When a conventional undervoltage operation inhibition circuit is applied to an electronic circuit breaker equipped with a plurality of microcomputers each having an output circuit for a tripping signal, two or more reset circuits are used accordingly and there are variations in the drive voltage of the reset circuits as a result. For that reason, the undervoltage operation inhibition circuit does not function until all the reset circuits reach a drive voltage or higher, and so there is a range of power supply voltage where output of an erroneous tripping signal of each microcomputer cannot be prevented. Moreover, since the release voltage of the reset circuits also varies, a pseudo load current may stop despite the reset state of all the microcomputers not being released, and a power supply circuit may become unstable.

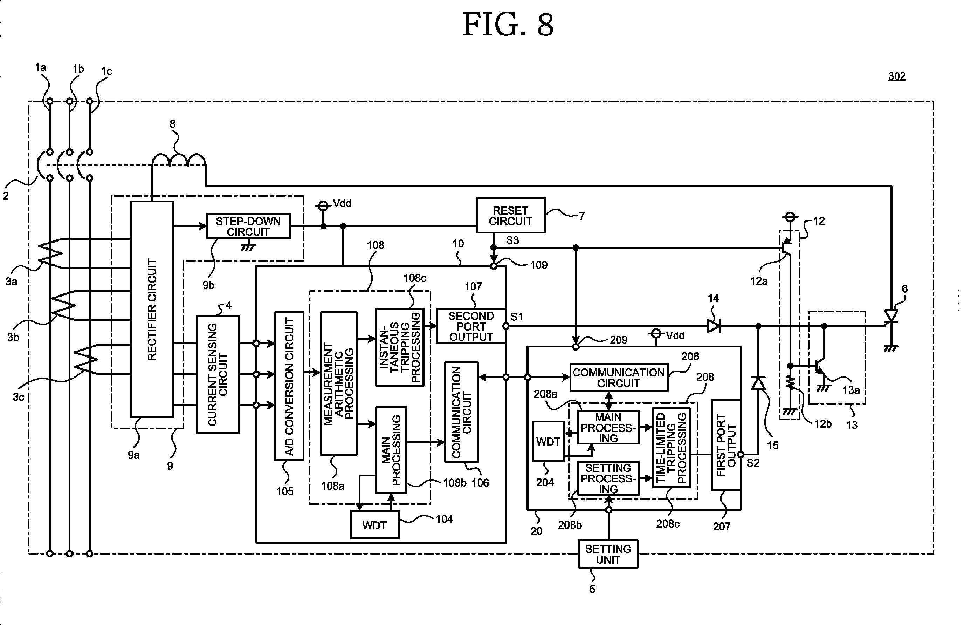

FIG. 8 is a circuit diagram illustrating one example of the invention according to a third embodiment. As illustrated in FIG. 8, in an electronic circuit breaker 302 according to the present embodiment, load currents flowing through conducting paths 1a, 1b, and 1c are detected by current transformers 3a, 3b, and 3c that are current sensors, and output currents on the secondary sides of the current transformers 3a, 3b, and 3c are inputted to the current sensing circuit 4 via a rectifier circuit 9a of a power supply circuit 9 and each converted into a voltage signal corresponding to the value of the load current. The voltage signal obtained by the conversion is inputted to the first microcomputer 10 and converted by the A/D conversion circuit 105 into a digital value corresponding to the magnitude of the input voltage. The digital value of the load current is processed in a similar manner to that of the first embodiment, and the instantaneous tripping processing 108c performs high level output of an instantaneous tripping signal S1 from the second port output 107 to the tripping circuit 6 connected through a backflow prevention diode 14 when the range of the instantaneous tripping characteristic is exceeded.

On the other hand, the measurement arithmetic processing 108a calculates an effective value and the maximum value in a predetermined cycle for the digital value of the input voltage obtained by the conversion of the A/D conversion circuit 105, and digital values for them are passed to a communication circuit 106. The communication circuit 106 is connected to a communication circuit 206 of the second microcomputer 20, wherein the calculated digital values for the effective value and maximum value are received, and passed to the time-limited tripping processing 208c of the second microcomputer 20. The time-limited tripping processing 208c performs operation according to the digital value being passed, that is, the magnitudes of the secondary output currents of the current transformers 3a, 3b, and 3c, and performs a time-limit operation in the case of overcurrent to then perform high level output of a time-limited tripping signal S2 from the first port output 207 to the tripping circuit 6 connected through a backflow prevention diode 15.

The current transformers 3a, 3b, and 3c supply the secondary output currents to a voltage step-down circuit 9b via the rectifier circuit 9a according to the load currents flowing through the conducting paths 1a, 1b, and 1c. The step-down circuit 9b generates a constant stepped-down positive power supply Vdd and supplies it to each of the reset circuit 7 and the first and second microcomputers 10 and 20. The reset circuit 7 monitors the voltage value of the positive power supply Vdd generated by the step-down circuit 9b, and changes a reset signal S3 from a low level to a high level when the voltage value becomes higher than or equal to a predetermined value (for example, 2.8 V). The reset signal S3 is inputted to a transistor 12a of a pseudo load current circuit 12, where a collector current equals zero with no potential difference between the base and the emitter of the transistor 12a. Accordingly, the voltage across a resistor 12b also equals zero, so that there is no potential difference between the base and the emitter of a transistor 13a of an AND circuit 13 connected to an input part of the tripping circuit 6.

That is, if the voltage value of the positive power supply Vdd generated by the step-down circuit 9b is less than a predetermined value, the current flows to the resistor 12b of the pseudo load current circuit 12 and at the same time the input part of the tripping circuit 6 is maintained at a low level by the transistor 13a connected to the tripping circuit 6, whereby the tripping circuit 6 is not driven even when the tripping signals S1 and S2 are erroneously outputted at a high level from the first and second microcomputers 10 and 20. If the positive power supply Vdd is higher than or equal to a predetermined value, the current flowing to the resistor 12b of the pseudo load current circuit 12 decreases and at the same time the transistor 13a is turned off, so that, when either the first or second microcomputer 10 or 20 outputs the tripping signal S1 or S2 at a high level, the tripping circuit 6 is driven to excite the tripping device 8, thereby leading to a state in which the make and break contact 2 is allowed to be mechanically opened through a make and break mechanism.

The step-down circuit 9b is in a transient state when the make and break contact 2 is switched from an open state to a closed state or immediately after a load device is turned on, or in some other cases, in which the positive power supply Vdd rises gradually. In the range below the operating voltage of the first and second microcomputers 10 and 20, the operations of the first and second microcomputers 10 and 20 are unstable so that the tripping signals S1 and S2 may have a high level, that is, erroneous signal may be outputted to the tripping circuit 6.

However, the reset circuit 7 monitors the voltage value of the positive power supply Vdd of the step-down circuit 9b as described above and so, if the output voltage is less than a predetermined value, the reset signal S3 is maintained at a low level to disable the tripping signals S1 and S2 of the first and second microcomputers 10 and 20, thereby making the tripping circuit 6 unable to be conductive and the tripping operation unallowable to be performed. The reset signal S3 is switched to a high level when the positive power supply Vdd of the step-down circuit 9b reaches the predetermined value, and thus the tripping signals S1 and S2 of the first and second microcomputers 10 and 20 are enabled.

The reset signal S3 of the reset circuit 7 is commonly connected to reset terminals 109 and 209 of the first and second microcomputers 10 and 20, by which the A/D conversion circuit 105, the measurement arithmetic processing 108a, the instantaneous tripping processing 108c, the time-limited tripping processing 208c, and the communication circuits 106 and 206 do not function as long as the input to the reset terminals 109 and 209 has a low level even when the power supply higher than or equal to the operating voltage of the first and second microcomputers 10 and 20 is applied to the microcomputers. The first and second microcomputers 10 and 20 start the arithmetic processing only after the input to the reset terminals 109 and 209 has been switched to a high level, thereby leading to a state in which the tripping operation can be performed according to the load current flowing through the conducting paths 1a, 1b, and 1c.

When the load current flowing through the conducing paths 1a, 1b, and 1c decreases to cause the voltage value of the positive power supply Vdd to fall below a predetermined value while the step-down circuit 9b is in a steady state, the reset signal S3 of the reset circuit 7 is switched from a high level to a low level to cause the transistor 13a to be conductive to thereby disable the tripping signals S1 and S2 of the first and second microcomputers 10 and 20. At the same time, a low level reset signal is inputted to the reset terminals 109 and 209 of the first and second microcomputers 10 and 20, thereby to stop the arithmetic processing of the first and second microcomputers 10 and 20 and maintain the reset state. When the load current flowing through the conducting paths 1a, 1b, and 1c increases thereafter, the voltage value of the positive power supply Vdd increases and causes the reset signal S3 of the reset circuit 7 to be switched from a low level to a high level once the voltage value exceeds a predetermined value, thereby to enable the tripping signals S1 and S2 of the first and second microcomputers 10 and 20, and the reset state of the first and second microcomputers 10 and 20 is released by inputting the high level reset signal to the reset terminals 109 and 209 of the first and second microcomputers 10 and 20 to resume the arithmetic processing.

As described above, the single reset circuit 7 allows the first and second microcomputers 10 and 20 to start their arithmetic processing only when the power supply voltage is normal, and the tripping signals S1 and S2 of the microcomputers are enabled.

Note that the other configurations are similar to those of the first embodiment, and their description is omitted by assigning the same reference signs to them.

According to the present embodiment, the reset circuit includes only the reset circuit 7, so that there is no variation in the drive voltage and the release voltage of reset circuits to allow for monitoring of the power supply voltage with a constant voltage threshold at all times, whereby the undervoltage operation inhibition circuit can prevent each microcomputer from outputting an erroneous tripping signal when the state of the power supply is unstable.

Moreover, with the reset circuit including only the reset circuit 7, the number of parts in the undervoltage operation inhibition circuit consisting of the reset circuit 7, the AND circuit 13, and the pseudo load current circuit 12 can be reduced, and the electronic circuit breaker can be configured with small footprint and at low cost.

### Fourth Embodiment.

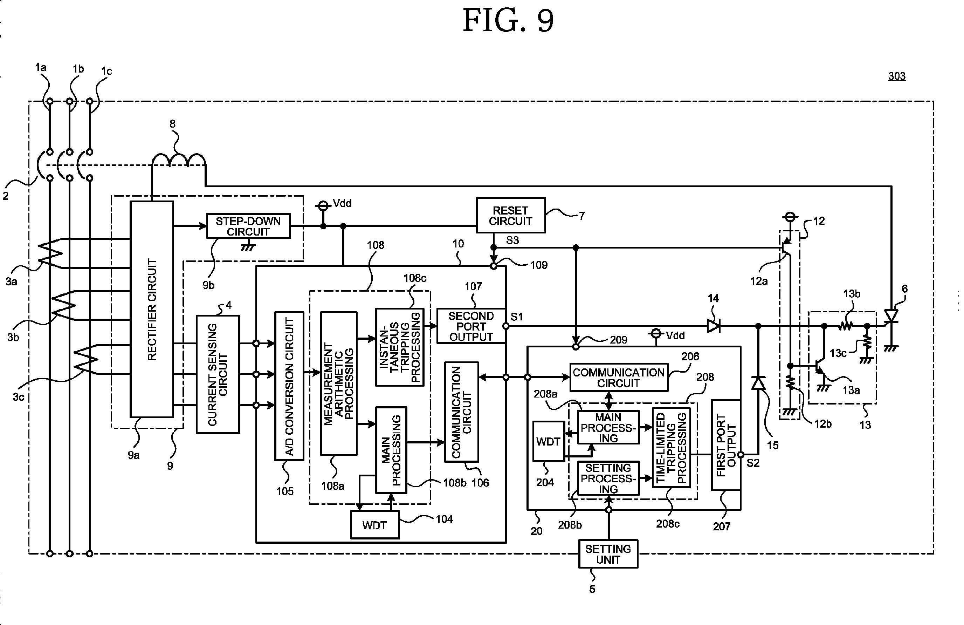

FIG. 9 is a circuit diagram illustrating an electronic circuit breaker according to a fourth embodiment. As illustrated in FIG. 9, an electronic circuit breaker 303 of the present embodiment includes, as the AND circuit 13, a resistor 13b provided in series between the transistor 13a and the input part of the tripping circuit 6, and a resistor 13c provided between the connection of the transistor 13a and the tripping circuit 6 and the ground. The reset circuit 7 monitors the voltage value of the positive power supply Vdd of the voltage step-down circuit 9b and is driven by a positive power supply voltage thereof. Accordingly, when the load current flowing through the conducting paths 1a, 1b, and 1c is small (for example, 10% of the rated current) and the voltage value of the positive power supply Vdd generated by the step-down circuit 9b is small (for example, 0.7 V), the reset circuit 7 is not driven, and there is a range where the reset signal S3 has a high level, that is, the reset signal has the same potential as the positive power supply Vdd.

When erroneous tripping signals S1 and S2 are outputted from the first and second microcomputers 10 and 20 in this range, the tripping circuit 6 is driven to cause a malfunction of the electronic circuit breaker.

In the circumstances, by providing a voltage dividing circuit based on the resistors 13b and 13c to adjust the resistance values of the resistors 13b and 13c so that the voltage value of the erroneous tripping signals S1 and S2 in such a voltage range is reduced to be equal to or less than the drive voltage of the tripping circuit 6, the malfunction can be prevented and reliability of the electronic circuit breaker 303 can be further improved. It is of course needless to say that the resistance values of the resistors 13b and 13c need to be adjusted so that the voltage value is higher than or equal to the drive voltage of the tripping circuit 6 when the tripping signals S1 and S2 are outputted at a high level in the steady state.

### Fifth Embodiment.

Next, an electronic circuit breaker according to a fifth embodiment of the present invention will be described.

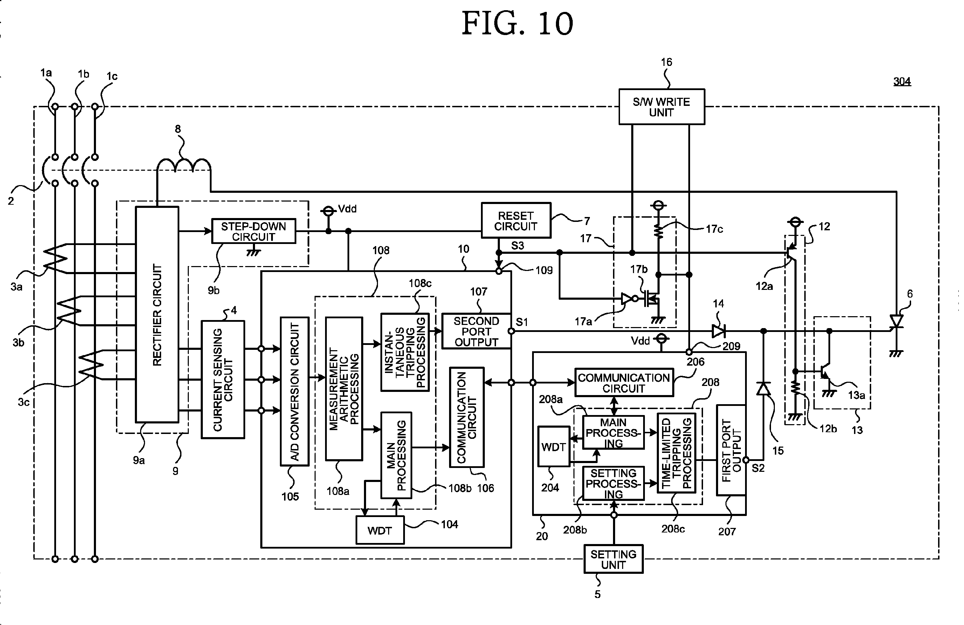

FIG. 10 is a circuit diagram illustrating an electronic circuit breaker according to the fifth embodiment.

In general, a reset terminal of a microcomputer may also be used as a debug terminal for writing firmware, and when the firmware is written in one of the microcomputers from an S/W write terminal in a state in which the circuit is configured, that is, in a state in which the reset terminals of the first and second microcomputers 10 and 20 are made common, the reset terminal repeats a high level and a low level according to data transmission and reception, so that the other microcomputer repeats reset start. Here, in the case of the specification in which the reset terminal is set as a general-purpose output terminal when resetting of the other microcomputer is released, there may be envisaged a problem that the transmission or reception waveform of S/W write data is disturbed and writing cannot be realized.

In this situation, as illustrated in FIG. 10, an electronic circuit breaker 304 of the present embodiment includes a buffer circuit 17 provided between the reset terminal 109 of the first microcomputer 10 and the reset terminal 209 of the second microcomputer 20, and an S/W write unit 16 having one end connected to the reset terminal 109 of the first microcomputer 10 and another end connected to the reset terminal 209 of the second microcomputer 20.

The buffer circuit 17 includes an inverter 17a to which the output of the reset circuit 7 is inputted, an FET 17b with a gate connected to the output of the inverter 17a and a source connected to the ground, and a resistor 17c having one end connected to the positive power supply Vdd and another end connected to the drain of the FET 17b. Note that the other configurations are similar to those of the first embodiment and their description is omitted with assigning the same reference signs to them.

The reset signal S3 from the reset circuit 7 is inputted to the inverter 17a of the buffer circuit 17, and when the reset signal S3 is at a high level, the FET 17b has a high impedance between its drain and source, so that a high level signal is inputted to the reset terminal 209 of the second microcomputer 20 via the resistor 17c. When the reset signal S3 is at a low level, the FET 17b is turned on, so that the connection between the drain of the FET 17b and the resistor 17c is at a low level, and a low level signal is inputted to the reset terminal 209 of the second microcomputer 20.

As a result, even when transmission and reception of the S/W write data for one microcomputer (for example, the first microcomputer 10) causes the other microcomputer (for example, the second microcomputer 20) to repeat reset start, the signal to the reset terminal 209 of the second microcomputer 20 does not affect the reset terminal 109 of the first microcomputer 10.

According to the present embodiment, the buffer circuit 17 is provided between the reset terminals 109 and 209 of the first and second microcomputers 10 and 20, so that, even when the potential of the reset terminal 209 of the second microcomputer 20 changes, it is possible to prevent the reset terminal 109 of the first microcomputer 10 and the input of the pseudo load current circuit 12 from being affected.

### Sixth Embodiment.

Next, an electronic circuit breaker according to a sixth embodiment of the present invention will be described.

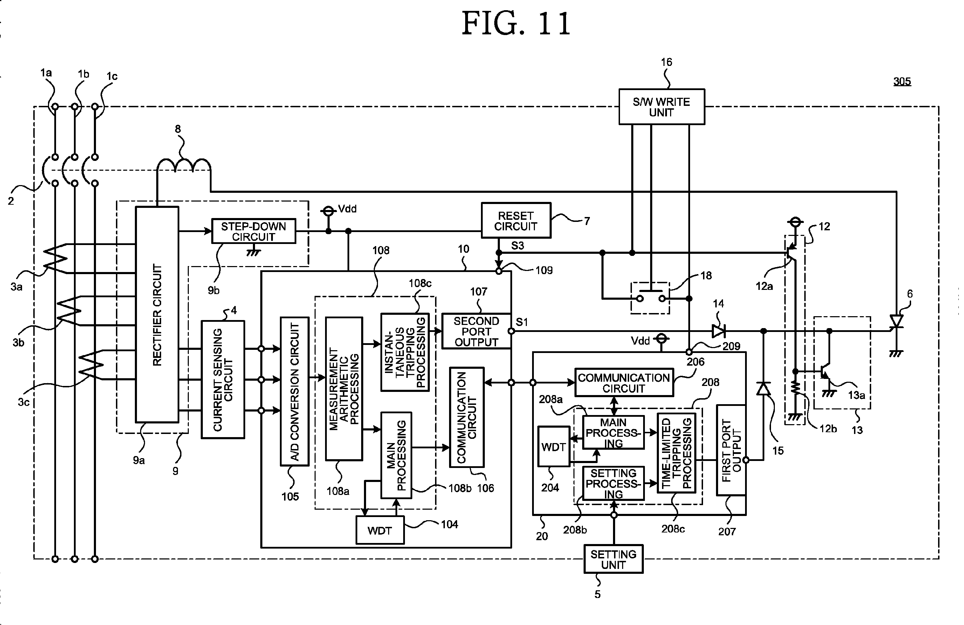

FIG. 11 is a circuit diagram of an electronic circuit breaker according to the sixth embodiment. As illustrated in FIG. 11, an electronic circuit breaker 305 of the present embodiment is provided with a switching circuit 18 in place of the buffer circuit 17 of the fifth embodiment. The switching circuit 18 is controlled to be open so that S/W is written normally when the S/W write unit 16 is driven, or operated to be closed when S/W is not written. Note that the other configurations are similar to those of the fifth embodiment and their description is omitted with assigning the same reference signs to them.

### Reference Signs List

2 make and break contact; 3 current sensor; 4 current sensing circuit; 5 setting unit; 6 tripping circuit; 7 reset circuit; 8 tripping device; 10 first microcomputer; 20 second microcomputer; 106 communication circuit; 106a first port output; 106b parallel communication; 106c serial communication; 107 second port output; 206 communication circuit; 206a port input; 206b parallel communication; 206c serial communication; 207 first port output; 300 electronic circuit breaker.

## Claims

1. An electronic circuit breaker (300) comprising:
a make and break contact (2) to open and close a conducting path (1),
a current sensor (3) to detect an electrical current through the conducting path (1);
a first microcomputer (10) to receive an output signal of the current sensor (8) as an input and output an instantaneous tripping signal;
a second microcomputer (20) to acquire information on a current flowing through the conducing path (1) and output a time-limited tripping signal; and
a tripping device (8) to release the make and break contact (2) on the basis of the instantaneous tripping signal and the time-limited tripping signal,
**characterized in that**
the second microcomputer (20) acquires information on a current flowing through the conducing path (1) from the first microcomputer (10);
the first microcomputer (10) notifies the second microcomputer (20) that the first microcomputer (10) has been restarted by a port output (106a) of the first microcomputer (10) or parallel communication (106b, 206b) and the second microcomputer (20) notifies the first microcomputer (10) that the second microcomputer (20) has been restarted by parallel communication (106b, 206b) or a port output (206d) of the second microcomputer (20).

2. The electronic circuit breaker according to claim 1, further comprising
a setting unit (5) connected to the second microcomputer (20) to set an instantaneous tripping characteristic and a time-limited tripping characteristic for releasing the make and break contact (2) according to a current flowing through the conducting path (1), wherein
the second microcomputer (20) transmits the instantaneous tripping characteristic to the first microcomputer (10) by the parallel communication (206b).

3. The electronic circuit breaker according to claim 2, further comprising a serial communication unit to periodically transmit the information on the current from the first microcomputer (10) to the second microcomputer (20).

4. The electronic circuit breaker according to any one of claims 1 to 3, wherein the current sensor (3) is configured by a current transformer (3a, 3b, 3c), and the breaker further comprises:
a rectifier circuit (9a) connected to a secondary side of the current transformer (3a, 3b, 3c) to convert a secondary output current corresponding to the current flowing through the conducting path (1) in a single direction;
a step-down circuit (9b) connected to an output terminal of the rectifier circuit (9a) to output a constant stepped-down voltage;
a single reset circuit (7) to simultaneously perform reset control on the first microcomputer (10) and the second microcomputer (20) when the step-down circuit (9b) does not reach a predetermined voltage;
a tripping circuit (6) to drive the tripping device (8) on the basis of the instantaneous tripping signal and the time-limited tripping signal; and
an undervoltage operation inhibition circuit (7, 13, 12) to inhibit drive of the tripping circuit (6) when a power supply for the step-down circuit (9b) is started up or when the power supply is unstable.

5. The electronic circuit breaker according to claim 4, further comprising a voltage dividing circuit configured by a first resistor (13b) inserted between an input terminal of the tripping circuit (6) and a connection point of an output terminal of the instantaneous tripping signal and an output terminal of the time-limited tripping signal, and a second resistor (13c) connected between the first resistor (13b) and a ground, wherein
in a range where the voltage of the step-down circuit (9b) has a low value such that the undervoltage operation inhibition circuit (7, 13, 12) does not function, the instantaneous tripping signal and the time-limited tripping signal are controlled to have a voltage by which the tripping circuit (6) is not driven.

6. The electronic circuit breaker according to claim 5, further comprising:
a buffer circuit (17) provided between the single reset circuit (7) and reset terminals (109, 209) of the first microcomputer (10) and the second microcomputer (20); and
an S/W write unit (16) connected to each of the reset terminals (109, 209) of the first microcomputer (10) and the second microcomputer (20), wherein
even when S/W write is executed using a reset terminal of either one of the first microcomputer (10) and the second microcomputer (20), the output of a reset terminal of another one of the microcomputers is not affected, and even in a state in which a circuit is formed, the S/W write to the first microcomputer (10) and the second microcomputer (20) is enabled.

7. The electronic circuit breaker according to claim 6, wherein the buffer circuit (17) is replaced with a switch circuit (16), and an opening/closing operation of the switch circuit (16) is performed at the time of the S/W write to enable the S/W write to the first microcomputer (10) and the second microcomputer (20) even in the state in which the circuit is formed.

## Patentansprüche

1. Ein elektronischer Schaltungsunterbrecher (300), umfassend:
einen Schließer/Öffner-Kontakt (2), um einen Leitungspfad (1) zu öffnen und zu schließen,
einen Stromsensor (3), um einen elektrischen Strom zu detektieren, der durch den Leitungspfad (1) fließt;
einen ersten Mikrocomputer (10), um ein Ausgabesignal des Stromsensors (8) als eine Eingabe zu empfangen und ein sofortiges Auslösesignal zu erzeugen;
einen zweiten Mikrocomputer (20), um Information über einen Strom zu gewinnen, der durch den Leitungspfad (1) fließt, und ein zeitbegrenztes Auslösesignal auszugeben; und
eine Auslösevorrichtung (8), um den Schließer/Öffner-Kontakt (2) basierend auf dem sofortigen Auslösesignal und dem zeitlich begrenzten Auslösesignal auszulösen,
**dadurch gekennzeichnet, dass**
der zweite Mikrocomputer (20) Information über einen durch den Leitungspfad (1) fließenden Strom von dem ersten Mikrocomputer (10) gewinnt;
der erste Mikrocomputer (10) den zweiten Mikrocomputer (20) darüber informiert, dass der erste Mikrocomputer (10) durch eine Port-Ausgabe (106a) des ersten Mikrocomputers (10) oder parallele Kommunikation (106b, 206b) erneut gestartet wurde und
der zweite Mikrocomputer (20) den ersten Mikrocomputer (10) informiert, dass der zweite Mikrocomputer (20) durch parallele Kommunikation (106b, 206b) oder Port-Ausgabe (206d) des zweiten Mikrocomputers (20) neu gestartet wurde.

2. Der elektronische Schaltungsunterbrecher nach Anspruch 1, ferner umfassend eine Einstelleinheit (5), die mit dem zweiten Mikrocomputer (20) verbunden ist, um eine Charakteristik des sofortigen Auslösens und eine Charakteristik des zeitbegrenzten Auslösens zum Auslösen des Schließer/Öffner-Kontakts (2) gemäß einem durch den Leitungspfad fließenden Strom einzustellen, wobei der zweite Mikrocomputer (20) die Charakteristik des sofortigen Auslösens an den ersten Mikrocomputer (10) durch die parallele Kommunikation (206b) überträgt.

3. Der elektronische Schaltungsunterbrecher nach Anspruch 2, ferner umfassend eine serielle Kommunikationseinheit, um die Information über den Strom von dem ersten Mikrocomputer (10) zu dem zweiten Mikrocomputer (20) periodisch zu übertragen.

4. Der elektronische Schaltungsunterbrecher nach einem der Ansprüche 1 bis 3, wobei
der Stromsensor (3) durch einen Stromtransformator (3a, 3b, 3c) gebildet ist und der Unterbrecher ferner umfasst:
eine Gleichrichtschaltung (9a), die mit einer Sekundärseite des Stromtransformators (3a, 3b, 3c) verbunden ist, um einen sekundärseitigen Ausgangsstrom, der einem durch den Leitungspfad (1) fließenden Strom entspricht, in eine einzelne Richtung umzuwandeln;
einen Abwärtswandlerschaltung (9b), die mit einem Ausgabeanschluss der Gleichrichtschaltung (9a) verbunden ist, um eine konstante abwärts gewandelte Spannung auszugeben;
eine einzelne Rücksetzschaltung (7), um für den ersten Mikrocomputer (10) und den zweiten Mikrocomputer (20) gleichzeitig eine Rücksetzsteuerung auszuführen, wenn die Abwärtswandlerschaltung (9b) eine vorbestimmte Spannung nicht erreicht;
eine Auslöseschaltung (6), um die Auslösevorrichtung (8) basierend auf dem sofortigen Auslösesignal und dem zeitbegrenzten Auslösesignal zu treiben; und eine Unterspannungsbetriebsverhinderungsschaltung (7, 13, 12), um das Treiben der Auslöseschaltung (6) zu verhindern, wenn eine Leistungsversorgung für die Abwärtswandlerschaltung (9b) gestartet wird oder wenn die Leistungsversorgung instabil ist.

5. Der elektronische Schaltungsunterbrecher nach Anspruch 4, ferner umfassend eine Spannungsteilerschaltung, die durch einen ersten Widerstand (13b) gebildet ist, der zwischen einem Eingangsanschluss der Auslöseschaltung (6) und einem Verbindungspunkt eines Ausgangsanschlusses des sofortigen Auslösesignals und einem Ausgangsanschluss des zeitbegrenzten Auslösesignals eingefügt ist, und einen zweiten Widerstand (13c), der zwischen dem ersten Widerstand (13b) und Masse geschaltet ist, wobei in einem Bereich, in dem die Spannung der Abwärtswandlerschaltung (9b) einen niedrigen Wert aufweist, sodass die Unterspannungsbetriebsverhinderungsschaltung (7, 13, 12) nicht arbeitet, das sofortige Auslösesignal und das zeitlich begrenzte Auslösesignal so gesteuert werden, dass sie eine Spannung aufweisen, durch welche die Auslöseschaltung (6) nicht betrieben wird.

6. Der elektronische Schaltungsunterbrecher nach Anspruch 5, ferner umfassend:
eine Pufferschaltung (7), die zwischen der einzelnen Rücksetzschaltung (7) und Rücksetzanschlüssen (109, 209) des ersten Mikrocomputers (10) und des zweiten Mikrocomputers (20) vorgesehen sind; und
eine S/W-Schreibeeinheit (16), die zwischen den Rücksetzanschlüssen (109, 209) des ersten Mikrocomputers (10) und des zweiten Mikrocomputers (20) geschaltet ist, wobei
selbst wenn S/W-Schreiben unter Verwendung eines Rücksetzanschlusses des ersten Mikrocomputers (10) oder des zweiten Mikrocomputers (20) verwendet wird, die Ausgabe eines Rücksetzanschlusses des anderen Mikrocomputers nicht beeinflusst wird, und selbst in einem Zustand, in dem eine Schaltung gebildet wird, dass S/W-Schreiben des ersten Mikrocomputers (10) und des zweiten Mikrocomputers (20) ermöglicht ist.

7. Der elektronische Schaltungsunterbrecher nach Anspruch 6, wobei die Pufferschaltung (17) durch eine Schalterschaltung (16) ersetzt ist, und ein Öffnungs-/Schließungs-Vorgang der Schaltungsschaltung (16) zu der Zeit des S/W-Schreibens ausgeführt wird, um das S/W-Schreiben an den ersten Mikrocomputer (10) und den zweiten Mikrocomputer (20) selbst in dem Zustand zu ermöglichen, in dem die Schaltung gebildet wird.

## Revendications

1. Disjoncteur électronique (300) comprenant :
un contact à ouverture et à fermeture (2) pour ouvrir et fermer un chemin de conduction (1), un capteur de courant (3) pour détecter un courant électrique à travers le chemin de conduction (1) ;
un premier micro-ordinateur (10) pour recevoir un signal de sortie du capteur de courant (8) en tant qu'entrée et émettre un signal de déclenchement instantané ;
un second micro-ordinateur (20) pour acquérir des informations sur un courant circulant à travers le chemin de conduction (1) et émettre un signal de déclenchement limité dans le temps ; et
un dispositif de déclenchement (8) pour libérer le contact à ouverture et à fermeture (2) sur la base du signal de déclenchement instantané et du signal de déclenchement limité dans le temps,
**caractérisé en ce que**
le second micro-ordinateur (20) acquiert des informations sur un courant circulant à travers le chemin de conduction (1) du premier micro-ordinateur (10) ;
le premier micro-ordinateur (10) notifie au second micro-ordinateur (20) que le premier micro-ordinateur (10) a été redémarré par une sortie de port (106a) du premier micro-ordinateur (10) ou de communication parallèle (106b, 206b) et le second micro-ordinateur (20) notifie au premier micro-ordinateur (10) que le second micro-ordinateur (20) a été redémarré par une communication parallèle (106b, 206b) ou une sortie de port (206d) du second micro-ordinateur (20).

2. Disjoncteur électronique selon la revendication 1, comprenant en outre une unité de réglage (5) connectée au second micro-ordinateur (20) pour régler une caractéristique de déclenchement instantané et une caractéristique de déclenchement limité dans le temps servant à libérer le contact à ouverture et à fermeture (2) selon un courant circulant à travers le chemin de conduction (1), le second micro-ordinateur (20) transmettant la caractéristique de déclenchement instantané au premier micro-ordinateur (10) par la communication parallèle (206b).

3. Disjoncteur électronique selon la revendication 2, comprenant en outre une unité de communication en série pour transmettre périodiquement les informations sur le courant du premier micro-ordinateur (10) au second micro-ordinateur (20).

4. Disjoncteur électronique selon l'une quelconque des revendications 1 à 3, le capteur de courant (3) étant configuré par un transformateur de courant (3a, 3b, 3c), et le disjoncteur comprenant en outre :
un circuit redresseur (9a) connecté à un côté secondaire du transformateur de courant (3a, 3b, 3c) pour convertir un courant de sortie secondaire correspondant au courant circulant à travers le chemin de conduction (1) dans une direction unique ;
un circuit abaisseur (9b) connecté à une borne de sortie du circuit redresseur (9a) pour délivrer une tension abaissée constante ;
un circuit de réinitialisation unique (7) pour effectuer simultanément une commande de réinitialisation sur le premier micro-ordinateur (10) et le second micro-ordinateur (20) lorsque le circuit abaisseur (9b) n'atteint pas une tension prédéterminée ;
un circuit de déclenchement (6) pour entraîner le dispositif de déclenchement (8) sur la base du signal de déclenchement instantané et du signal de déclenchement limité dans le temps ; et
un circuit d'inhibition de fonctionnement de sous-tension (7, 13, 12) pour empêcher l'entraînement du circuit de déclenchement (6) lorsqu'une alimentation électrique pour le circuit abaisseur (9b) est lancée ou lorsque l'alimentation électrique est instable.

5. Disjoncteur électronique selon la revendication 4, comprenant en outre un circuit de division de tension configuré par une première résistance (13b) insérée entre une borne d'entrée du circuit de déclenchement (6) et un point de connexion d'une borne de sortie du signal de déclenchement instantané et une borne de sortie du signal de déclenchement limité dans le temps, et une seconde résistance (13c) connectée entre la première résistance (13b) et une masse, dans lequel
dans une plage où la tension du circuit abaisseur (9b) a une valeur inférieure telle que le circuit d'inhibition de fonctionnement de sous-tension (7, 13, 12) ne fonctionne pas, le signal de déclenchement instantané et le signal de déclenchement limité dans le temps sont commandés de manière à avoir une tension par laquelle le circuit de déclenchement (6) n'est pas excité.

6. Disjoncteur électronique selon la revendication 5, comprenant en outre :
un circuit tampon (17) prévu entre le circuit de réinitialisation unique (7) et les bornes de réinitialisation (109, 209) du premier micro-ordinateur (10) et du second micro-ordinateur (20) ; et
une unité d'écriture S/W (16) connectée à chacun des terminaux de réinitialisation (109, 209) du premier micro-ordinateur (10) et du second micro-ordinateur (20), dans lequel même lorsque l'écriture S/W est exécutée à l'aide d'une borne de réinitialisation de l'un ou l'autre du premier micro-ordinateur (10) et du second micro-ordinateur (20), la sortie d'une borne de réinitialisation d'un autre des micro-ordinateurs n'est pas affectée, et même dans un état dans lequel un circuit est formé, l'écriture S/W au premier micro-ordinateur (10) et au second micro-ordinateur (20) est activée.

7. Disjoncteur électronique selon la revendication 6, le circuit tampon (17) étant remplacé par un circuit de commutation (16), et une opération d'ouverture/fermeture du circuit de commutation (16) étant effectuée au moment de l'écriture S/W pour permettre l'écriture S/W sur le premier micro-ordinateur (10) et le second micro-ordinateur (20) même dans l'état dans lequel le circuit est formé.
